# EUROPEAN PATENT APPLICATION

(11) **EP 4 644 618 A1**
(43) Date of publication of application: **05.11.2025**
(21) Application number: 23912813.5
(22) Date of filing: 22.12.2023
(51) Int. Cl.: E02F 9/08, E02F 9/22, B60H 1/32, B60H 1/00, B60H 1/22

(54) **CONSTRUCTION MACHINE AND HEAT MANAGEMENT DEVICE INSTALLED THEREIN**

(30) Priority: 27.12.2022 KR 20220185487
(71) Applicant: HD Hyundai Infracore Co., Ltd., Incheon 22502 (KR)
(72) Inventor: PARK, Woonghee, Hwaseong-si, Gyeonggi-do 18467 (KR)
(74) Representative: Isarpatent
(86) International application number: PCT/KR2023/021395
(87) International publication number: WO 2024/144138

(57) **Abstract**

An embodiment of the present disclosure relates to a construction machine and a heat management device installed therein. The construction machine comprises: a power supply device that provides power to the construction machine; a hydraulic oil cooling device that cools hydraulic oil for operating the construction machine; an indoor temperature control device that supplies cooled or heated air to an operator; and a heat management device which controls the temperature of the power supply device by using the hydraulic oil that flows into the hydraulic oil cooling device or through heat exchange with the indoor temperature control device, wherein a fluid passes through the inside of the heat management device.

## Description

### [TECHNICAL FIELD]

An embodiment of the present disclosure relates to a construction machine and a heat management device installed therein, and more particularly, to a construction machine capable of controlling the temperature of a power unit, and a heat management device installed therein.

### [BACKGROUND ART]

In general, construction machines perform operations such as excavation or earth transport outdoors. Since construction machines are used outdoors, the components installed in the construction machines can be significantly affected by weather or temperature.

Further, in the case of construction machines that use a battery as a power source, a separate temperature control device must be provided to control the temperature of the battery. Specifically, when the battery increases in temperature due to its operation or the temperature of the external environment, it must be cooled to prevent it from remaining at a high temperature.

Further, when the battery is exposed to low temperatures due to the temperature of the external environment, an additional heat source is needed to raise its temperature.

However, if separate cooling and heating sources are required to manage the battery, installation space is needed to accommodate such configurations.

Further, parts for the cooling and heating sources for managing the battery are required, which results in a problem of high cost in configuring a device for battery management.

### [DETAILED DESCRIPTION OF INVENTION]

### [TECHNICAL PROBLEMS]

An embodiment of the present disclosure provides a construction machine and a heat management device installed therein, which are capable of adjusting the temperature of a power unit by recovering or exchanging thermal energy during cooling or heating of the construction machine.

### [TECHNICAL SOLUTION]

According to an embodiment, a construction machine includes: a power unit configured to provide power to the construction machine; a hydraulic oil cooling device configured to cool hydraulic oil for operating the construction machine; an interior temperature control device configured to supply cooled or heated air to an operator; and a heat management device through which fluid passes and which controls temperature of the power unit through heat exchange with hydraulic fluid flowing into the hydraulic fluid cooling device or with the interior temperature control device.

Further, the heat management device may include: a first heat exchanger capable of exchanging heat with hydraulic oil flowing into the hydraulic oil cooling device; a second heat exchanger capable of exchanging heat with a refrigerant of the interior temperature control device; and a first valve disposed between the first heat exchanger and the second heat exchanger and selectively controlled depending on temperature control of the power unit.

Further, the heat management device may further include a heater capable of heating fluid when heating the power unit.

Further, the heat management device may control the first valve such that the fluid heats the power unit and then passes through the second heat exchanger when heating the power unit.

Further, the heat management device may further include a second valve configured to selectively allow the fluid to bypass the second heat exchanger, depending on temperature of hydraulic oil.

Further, the interior temperature control device may further include a heater core capable of supplying heated air to an interior by receiving fluid.

Further, the heat management device may control the first valve such that fluid that has passed through the second heat exchanger cools the power unit when cooling the power unit.

Alternatively, according to an embodiment, a construction machine includes: a power unit configured to provide power to the construction machine; an interior temperature control device including a heater core capable of supplying heated air into a cabin by operating during heating and a cooling member capable of supplying cooled air into the cabin by operating during cooling; and a heat management device configured to control temperature of the power unit by exchanging heat with a refrigerant flowing into the cooling member during cooling and by supplying fluid, which has passed through the heater core, during heating.

Further, the heat management device may include: a first flow path configured to guide fluid, which has passed through the heater core, to the power unit; a second flow path configured to guide fluid, which has exchanged heat with a refrigerant passing through the cooling member, to the power unit; and a first valve disposed between the first flow path and the second flow path and capable of selectively supplying heated fluid or cooled fluid to the power unit.

Further, the heat management device includes: a first pump configured to control flow of fluid passing through the first flow path; and a second pump configured to control flow of fluid passing through the second flow path.

Further, the heat management device may further include: a first heat exchanger capable of exchanging heat with hydraulic oil flowing into a hydraulic oil cooling device configured to cool hydraulic oil for operating the construction machine; a heater capable of heating fluid passing through the first flow path; and a third flow path configured to divert and guide a portion of fluid heated by the heater such that the fluid can exchange heat with the first heat exchanger.

Further, the heat management device may further include a second valve configured to selectively guide fluid to the third flow path, depending on temperature of hydraulic oil.

Further, the heat management device may guide fluid, which has exchanged heat with a refrigerant flowing into the cooling member, to the power unit when the power unit is charged.

Alternatively, a heat management device that is installed in a construction machine including a power unit configured to provide power to the construction machine, a hydraulic oil cooling device being operated by the power unit and configured to cool hydraulic oil for operating the construction machine, and an interior temperature control device capable of controlling temperature of the inside of a cabin, and that controls temperature of the power unit, includes: a heating unit capable of increasing the temperature of the power unit by recovering thermal energy during heating by the interior temperature control device; a cooling unit configured to reduce the temperature of the power unit by exchanging thermal energy with a refrigerant of the interior temperature control device; and a first valve configured to control the temperature of the power unit by selectively controlling flow of fluid passing through the heating unit or the cooling unit.

Further, the heating unit may further include: a first heat exchanger capable of exchanging heat with the hydraulic oil; a heater capable of heating fluid; and a second valve configured to selectively guide fluid into the first heat exchanger, depending on temperature of the hydraulic oil.

Further, the cooling unit may further include a second heat exchanger capable of exchanging heat with a refrigerant of the interior temperature control device.

### [EFFECT OF INVENTION]

According to embodiments of the present disclosure, the construction machine and the heat management device installed therein can recover or exchange thermal energy during cooling or heating and utilize the thermal energy to heat or cool the power unit.

### [BRIEF DESCRIPTION OF THE DRAWING]

FIG. 1 to FIG. 4 show an operation process of a construction machine according to an embodiment of the present disclosure.
FIG. 5 shows a block diagram of the construction machine according to an embodiment of the present disclosure.
FIG. 6 shows a block diagram of a heat management device according to an embodiment of the present disclosure.
FIG. 7 shows the heat management device according to an embodiment of the present disclosure.

### [BEST MODE FOR CARRYING OUT THE INVENTION]

Hereafter, embodiments of the present disclosure will be described in detail with reference to the accompanying drawings so that those skilled in the art can easily accomplish the present disclosure. As those skilled in the art would realize, the described embodiments may be modified in various different ways, all without departing from the spirit or scope of the present invention.

It should be noted that the drawings are schematic and are not constructed to fit the scales. The relative dimensions and ratios of the parts shown in the figures are exaggerated and reduced for clarity and convenience and certain dimensions are only examples without limiting the parts. The same structures, components, or parts shown in two or more drawings are given the same reference numerals to show similar characteristics.

Embodiments of the present disclosure show ideal embodiments of the present disclosure in detail. Accordingly, various changes may be predicted in the diagrams. Therefore, embodiments are not limited to specific shapes in regions shown in the figures, and for example, include also changes in shape by manufacturing.

Hereafter, a construction machine 101 according to an embodiment of the present disclosure is described. The construction machine 101 performs operations in an exposed environment. Therefore, the construction machine 101 may be significantly affected by external weather or temperature in relation to the components installed therein.

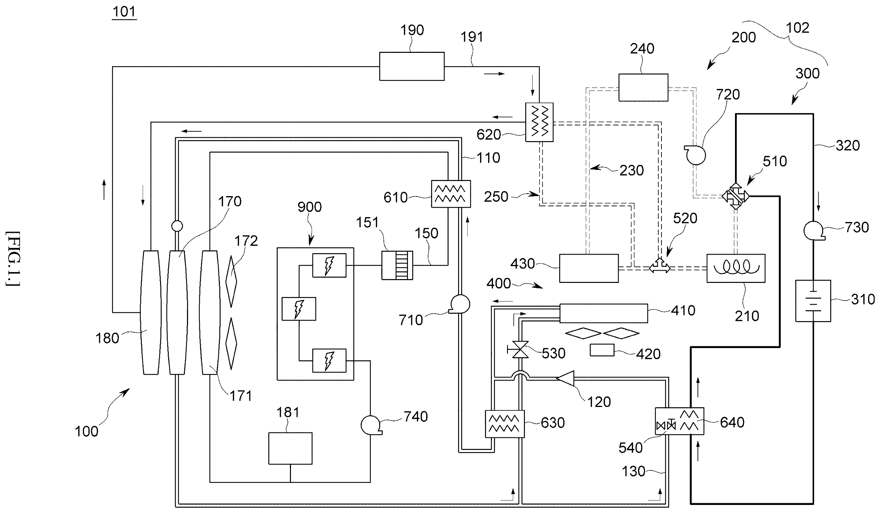

The construction machine 101 according to an embodiment of the present disclosure, as shown in FIG. 1 to FIG. 4, includes a power unit 310, a hydraulic oil cooling device 100, an interior temperature control device 400, and a heat management device 102.

The power unit 310 provides power for the construction machine to perform operations. The power unit 310 includes a battery, is charged with electricity, and provides power for driving a hydraulic system 190 required for the construction machine. Specifically, the power device 310 can provide power for driving the construction machine 101.

The hydraulic oil cooling device 100 can cool hydraulic oil. Specifically, the hydraulic oil cooling device 100 cools the heat generated in the hydraulic oil due to the operation of the hydraulic system 190 driven by the power unit 310 and supplies the cooled oil.

For example, the hydraulic system 190 may include a pump supplying hydraulic pressure and a hydraulic cylinder operated accordingly.

The hydraulic oil cooling device 100 can cool the hydraulic oil passing through this hydraulic system 190.

The indoor temperature control device 400 supplies cooled or heated air to an operator. Specifically, the indoor temperature control device 400 supplies heated or cooled air to an operator inside the cabin of the construction machine 101, whereby it can control the air temperature inside the cabin.

A fluid passes through the heat management device 102 and the heat management device 102 can control the temperature of the power unit 310. Further, the heat management device 102 can control the temperature of the power unit 310 through heat exchange with the hydraulic oil flowing into the hydraulic oil cooling device 100 or through heat exchange with the indoor temperature control device 400.

Specifically, the heat management device 102 has a fluid flowing through it and can control the temperature of the power unit 310 by heating or cooling the fluid flowing through it.

Through this configuration, the construction machine 101 according to an embodiment of the present disclosure can control the temperature of the power unit 310 by recovering waste heat generated from high-temperature hydraulic oil through the heat management device 102 or by receiving thermal energy through heat exchange with the indoor temperature control device 400 and by using the waste heat or the thermal energy.

Further, a heat management device 102 according to an embodiment of the present disclosure includes a first heat exchanger 620, a second heat exchanger 640, and a first valve 510.

The first heat exchanger 620 is capable of exchanging heat with hydraulic oil flowing into the hydraulic oil cooling device 100. Specifically, the first heat exchanger 620 may be configured such that the internal fluid exchanges heat with high-temperature working fluid flowing into the hydraulic oil cooling device 100.

That is, the first heat exchanger 620 can heat fluid by exchanging heat with the high-temperature hydraulic oil, and through such heat exchange, the temperature of the high-temperature hydraulic oil can become relatively lower than the temperature before entering the first heat exchanger 620. The first heat exchanger 620 can recover the temperature of the hydraulic oil and transfer it to fluid through heat exchange between the working fluid and the fluid.

The second heat exchanger 640 is capable of exchanging heat with the refrigerant of the interior temperature control device 400. The second heat exchanger 640 may be configured such that the internal fluid decreases in temperature through heat exchange with the refrigerant of the interior temperature control device 400.

Specifically, the interior temperature control device 400 may include a cooling unit 410 through which a refrigerant passes and which can supply cooled air into the cabin. That is, the second heat exchanger 640 performs heat exchange with the refrigerant that is supplied to the cooling member 410, and the fluid passing through the second heat exchanger 640 is cooled, whereby it is possible to decrease the temperature of the power unit 310.

The first valve 510 can be controlled such that the internal fluid passing through the heat management device 102 exchanges heat with at least one or more of the first heat exchanger 620 or the second heat exchanger 640. Further, the first valve 510 may also be disposed between the first heat exchanger 620 and the second heat exchanger 640. Further, the first valve 510 can be controlled in accordance with the temperature control state required for the power unit 310 such that the internal fluid is supplied after passing through at least one or more of the first heat exchanger 620 or the second heat exchanger 640.

Further, the heat management device 102 according to an embodiment of the present disclosure may further include a heater 210.

The heater 210 can heat the internal fluid of the heat management device 102. Further, the heater 210 can heat the internal fluid when heating of the power unit 310 is required. For example, the heater 210 may be a high-voltage heater.

Specifically, when the power unit 310 requires to be heated up, the heater 210 can operate to heat the internal fluid.

Further, the heat management device 102 according to an embodiment of the present disclosure can control the first valve 510 such that the fluid heated by the heater 210 is supplied when heating the power unit 310.

The heat management device 102 can guide the fluid heated by the heater 210 into the second heat exchanger 640 after the fluid heats the power unit 310, by controlling the first valve 510.

Further, the heat management device 102 of the construction machine 101 according to an embodiment of the present disclosure may further include a second valve 520.

The second valve 520 may be selectively operated, depending on the temperature of the hydraulic oil. Further, the second valve 520 can allow the fluid heated by the heater 210 to selectively bypass the second heat exchanger 640, depending on the temperature of the hydraulic oil.

When the temperature of the hydraulic oil exceeds a preset reference temperature, the second valve 520 can cause the internal fluid to be heated by recovering high-temperature waste heat from the hydraulic oil through the second heat exchanger 640.

Specifically, through heat exchange between the high-temperature hydraulic oil before flowing into the hydraulic oil cooling device 100 of the construction machine 101 by the second valve 520 and the fluid, the temperature of the high-temperature hydraulic oil can be lowered and the fluid can recover the waste heat possessed by the high-temperature hydraulic oil. Accordingly, the heated fluid can be supplied to heat the power unit 310.

Alternatively, when the temperature of the hydraulic oil is equal to or lower than a preset reference temperature, the second valve 520 can allow the internal fluid to bypass the second heat exchanger 640 and be supplied to heat the power unit 310.

Therefore, the heat management device 102 of the construction machine 101 according to an embodiment of the present disclosure can recover waste heat from the high-temperature hydraulic oil to heat and supply the fluid to heat the power unit 310, thereby being able to reduce the energy for heating the fluid.

Further, the construction machine 101 according to an embodiment of the present disclosure may further include a heater core 430.

The heater core 430 can receive the fluid heated by the heater 210 and supply heated air to the interior of the cabin where an operator of the construction machine 101 rides.

The heater core 430 can receive the fluid heated by the heater 210, heat air, and supply the heated air into the interior of the cabin. Specifically, heated air can be supplied when heating the interior of the cabin.

Further, the heat management device 102 of the construction machine 101 according to an embodiment of the present disclosure can control the first valve 510 such that the fluid that has passed through the second heat exchanger 640 lowers the temperature of the power unit 310 when cooling the power unit 310.

When cooling the power unit 310, the heat management device 102 can guide the cooled fluid that has passed through the second heat exchanger 640 to be supplied for cooling the power unit 310 by controlling the first valve 510.

The interior temperature control device 400 may further include a cooling unit 410. A refrigerant passes through the cooling unit 410 and the cooling unit 410 can supply cooled air into the cabin. Specifically, when cooling the cabin, cooled air can be supplied.

Further, the heat management device 102 according to an embodiment of the present disclosure may further include a first flow path 230 and a second flow path 320.

The first flow path 230 can guide the fluid that has passed through the heater core 430 to the power unit 310. Specifically, the first flow path 230 can guide the fluid, which has been heated by the heater 210 and has passed through the heater core 430, to the power unit 310.

That is, the first flow path 230 may be a flow path for heating the power unit 310.

The second flow path 320 can guide the fluid, which has exchanged heat with the refrigerant flowing through the cooling unit 410, to the power unit 310. Further, fluid passes through the second flow path 320 and the second flow path 320 can guide the fluid, whose temperature is lowered by exchanging heat with the refrigerant flowing into the cooling unit 410 of the interior temperature control device 400, into the power unit 310.

Specifically, the second flow path 320 can guide the fluid into the second heat exchanger 640.

That is, the second flow path 320 may be a flow path for cooling the power unit 310.

The first valve 510 may be disposed between the first flow path 230 and the second flow path 320. Further, the first valve 510 may selectively allow communication between the first flow path 230 and the second flow path 320 depending on whether the power unit 310 needs to be cooled or heated.

Specifically, when the power unit 310 needs to be cooled, the first valve 510 may be switched to separate the fluid passing through the first flow path 230 and the second flow path 320. In this case, the fluid passing through the second flow path 320 can be cooled by exchanging heat with the refrigerant passing through the second heat exchanger 640.

Alternatively, when the power unit 310 needs to be heated, the first valve 510 can allow communication between the first flow path 230 and the second flow path 320 such that that the fluid heated through the first flow path 230 heats the power unit 310 and then passes through the second flow path 320 to be reheated by the heater 210.

Further, the heat management device 102 of the construction machine 101 according to an embodiment of the present disclosure may further include a first pump 720 and a second pump 730.

The first pump 720 can control the flow of the fluid passing through the first flow path 230. The first pump 720 can move the fluid in the first flow path 230 to the power unit 310.

The second pump 730 can control the flow of the fluid passing through the second flow path 320. The second pump 730 can move the fluid in the second flow path 320 to the power unit 310.

Further, the heat management device 102 of the construction machine 101 according to an embodiment of the present disclosure, as shown in FIG. 1 to FIG. 4, may further include a third flow path 250.

The third flow path 250 can divert and guide a portion of the fluid heated by the heater 210 such that the fluid can exchange heat with the first heat exchanger 620. The third flow path 250 can divert a portion of the fluid heated through the heater 210 and flowing through the first flow path 230 such that the fluid can exchange heat with the first heat exchanger 620 and then flow back into the first flow path 230.

The fluid introduced through the third flow path 250 can exchange heat with the high-temperature hydraulic oil through the first heat exchanger 620. Further, the fluid that has passed through the third flow path 250 can be heated by recovering waste heat of the high-temperature hydraulic oil through the first heat exchanger 620. One side of the third flow path 250 may be connected to the first flow path 230 and the other side of the third flow path 250 may be connected between the first flow path 230 between the first flow path 230 connected to one side of the third flow path 250 and the heater core 430.

Specifically, a second valve 520 is installed between the first flow path 230 and the third flow path 250, and the second valve 520 can selectively allow a portion of the fluid passing through the first flow path 230 to flow into the third flow path 250. For example, the second valve 520 may be installed on one side of the third flow path 250.

Therefore, the fluid flowing in the first flow path 230 after passing through the third flow path 250 can be heated by receiving thermal energy not only from the heater 210 but also through heat exchange with the first heat exchanger 620.

Accordingly, it is possible to save the energy for operating the heater 210 to heat the fluid or further increase the temperature of the fluid.

That is, the fluid passing through the third flow path 250 can be heated by recovering waste heat of high-temperature hydraulic oil.

Further, the construction machine 101 according to an embodiment of the present disclosure may further include a hydraulic oil detection unit 910 and a control unit 900.

The hydraulic oil detection unit 910 can detect the temperature of the hydraulic oil. The hydraulic oil detection unit 910 can detect the temperature of the hydraulic oil before flowing into the hydraulic oil cooling device 100.

The control unit 900 can receive temperature information detected by the hydraulic oil detection unit 910. Further, preset reference temperature information is stored in the control unit 900. Further, the control unit 900 can control the second valve 520 on the basis of the information from the hydraulic oil detection unit 910.

Further, the control unit 900 can control the first valve 510.

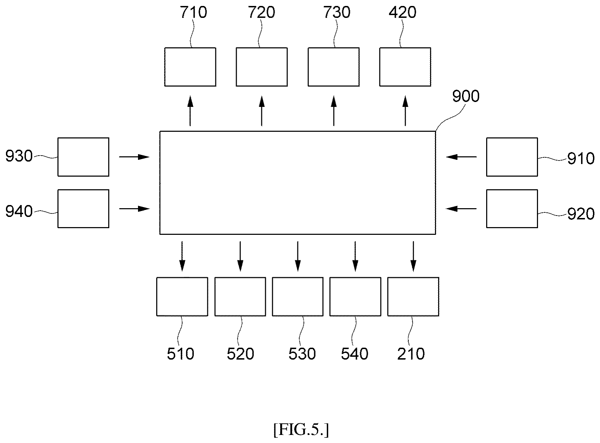

Further, the construction machine 101 according to an embodiment of the present disclosure, as shown in FIG. 5, may include a cooling input unit 930 and a heating input unit 940.

The cooling input unit 930 and the heating input unit 940 provide information for operation control of the interior temperature control device 400 to the control unit 900.

The cooling input unit 930 can be operated by the operator inside the cabin. Specifically, when information is input through the cooling input unit 930, the control unit 900 can control the interior temperature control device 400 to supply cooled air into the cabin.

The heating input unit 940 can be operated by the operator inside the cabin. Specifically, when information is input through the heating input unit 940, the control unit 900 can control the interior temperature control device 400 to supply heated air into the cabin.

Further, the control unit 900 can control the first valve 510 and the interior temperature control device 400 on the basis of the information received through the cooling input unit 930 and the heating input unit 940.

Further, the control unit 900 according to an embodiment of the present disclosure can control the first pump 720 and the second pump 730.

The control unit 900 can control the operation of the first pump 720 and the second pump 730 on the basis of the information received through the cooling input unit 930 and the heating input unit 940.

Further, the construction machine 101 according to an embodiment of the present disclosure may further include a state detection unit 920.

The state detection unit 920 can detect whether the power unit 310 is currently in a charging state. Specifically, the state detection unit 920 can detect whether the power unit 310, which is a battery, is currently in a charging state or not. Alternatively, the state detection unit 920 can detect the temperature of the power unit 310.

For example, the state detection unit 920 may be a battery management unit (BMS: Battery Management System) that controls management of a battery.

The control unit 900 can allow the power unit 310 to be cooled when the power unit 310 is currently being charged, on the basis of the information delivered from the state detection unit 920. Specifically, the control unit 900 can cause the refrigerant flowing into the cooling unit 410 and the fluid that has exchanged heat through the second heat exchanger 640 to lower the temperature of the power unit 310.

Further, the interior temperature control device 400 of the construction machine 101 according to an embodiment of the present disclosure may further include an interior temperature control fan 420.

The interior temperature control fan 420 can allow the air that has passed through the heater core 430 or the cooling unit 410 to flow into the interior of the cabin. Specifically, the interior temperature control fan 420 can guide the inflow and movement of air. The interior temperature control fan 420 can guide air into the cabin during heating or cooling through a duct not shown.

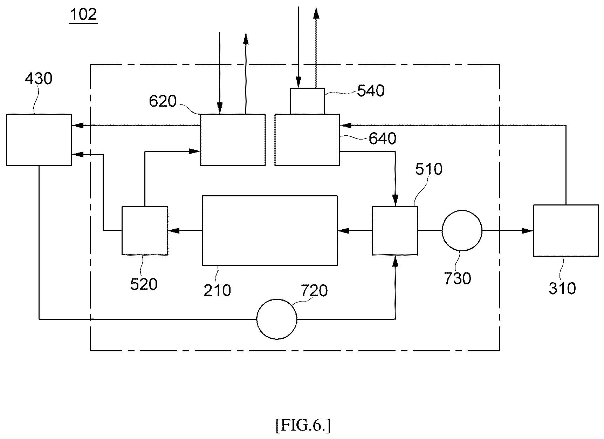

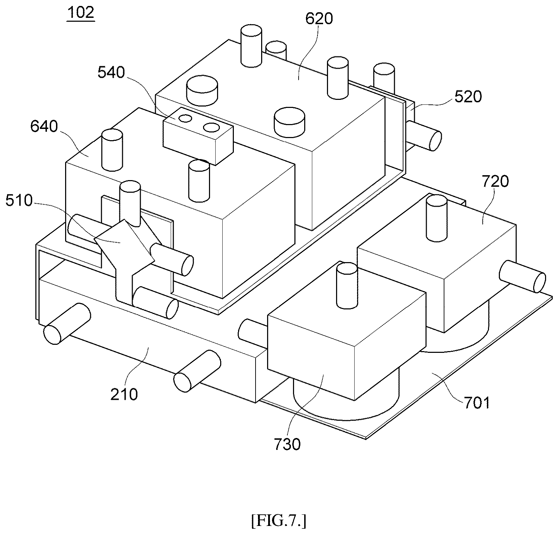

Further, the heat management device 102 according to an embodiment of the present disclosure, as shown in FIG. 6 and FIG. 7, may be formed as a single unit.

The heat management device 102, as shown in FIG. 1 to FIG. 4, may include a heating unit 200, a cooling unit 300, and a first valve 510.

The heating unit 200 can increase the temperature of the power unit 310. Specifically, the heating unit 200 can recover thermal energy generated during heating by the interior temperature control device 400 and use the thermal energy to increase the temperature of the power unit 310.

The cooling unit 300 can exchange thermal energy with the refrigerant of the interior temperature control device 400 and can reduce the temperature of the power unit 310. Specifically, the cooling unit 300 can exchange thermal energy with the refrigerant of the interior temperature control device 400 and use the thermal energy to increase the temperature of the power unit 310.

The first valve 510 can selectively control the flow of the fluid passing through the heating unit 200 or the cooling unit 300.

Further, the heating unit 200 of the heat management device 102 according to an embodiment of the present disclosure may include a first heat exchanger 620, a heater 210, a second valve 520, and a first pump 720.

Further, the cooling unit 300 may include a second heat exchanger 640 and a second pump 730.

As shown in FIG. 7, the heat management device 102 may be formed as a single unit. The first heat exchanger 620 and the second heat exchanger 640 may be disposed on one side of the heater 210. Further, the first pump 720 and the second pump 730 may be disposed so as to be spaced apart from the heater 210. Specifically, the first pump 720, the second pump 730, and the heater 210 are installed on a frame 701, and the first heat exchanger 620 and the second heat exchanger 640 may be disposed so as to be spaced apart from the first pump 720 and the second pump 730.

The first valve 510 and the second valve 520 may be disposed so as to be spaced apart from each other with the first heat exchanger 620 and the second heat exchanger 640 therebetween.

The second valve 520 may be disposed relatively closer to the first heat exchanger 620 than to the second heat exchanger 640. Alternatively, the first valve 510 may be disposed relatively closer to the second heat exchanger 640 than to the first heat exchanger 620.

Therefore, the components of the heat management device 102 are compactly installed, which allows for a high degree of freedom in installation space within the construction machine 101.

Hereafter, with reference to FIGS. 1 to 7, the operation process of the construction machine 101 according to an embodiment of the present disclosure and the heat management device 102 installed therein is described.

As the hydraulic system 190 that is operated by power provided by the power unit 310 is used, hydraulic oil flows into the hydraulic oil cooling device 100. Specifically, the hydraulic oil cooling device 100 includes a hydraulic oil line 191 and an oil cooler 180. That is, the hydraulic oil that has passed through the hydraulic system 190 can be cooled by the oil cooler 180 through the hydraulic oil line 191 and then can flow back into the hydraulic system.

As shown in FIG. 1, when a cooling condition is input to the cooling input unit 930 inside the cabin, the control unit 900 operates the cooling unit 410 and the interior temperature control fan 420 of the interior temperature control device 400 to cool the inside the cabin.

Specifically, the construction machine 101 may further include a refrigerant cooling device capable of cooling the refrigerant of the interior temperature control device 400. The refrigerant cooling device may further include a refrigerant flow path 110 through which a refrigerant moves, a condenser 170 capable of cooling the refrigerant passing through the refrigerant flow path 110, a branching flow path 130 that diverts a portion of the refrigerant moving toward the cooling unit 410 and guides it to the second heat exchanger 640, a compressor 710 that compresses and moves the refrigerant to the refrigerant flow path 110, and a first expansion valve 530 that can adjust the refrigerant flowing into the cooling unit 410.

The refrigerant flowing into the cooling unit 410 of the interior temperature control device 400 can be supplied after being cooled by the condenser 170 through the refrigerant flow path 110.

Specifically, the compressor 710 compresses the refrigerant and sends it to the condenser 170 in a high-temperature and high-pressure gaseous state. The refrigerant that has passed through the condenser 170 undergoes phase change into a high-temperature and high-pressure liquid refrigerant and moves along the refrigerant flow path 110. While passing through the first expansion valve 530, the liquid refrigerant vaporizes and undergoes phase change into a low-temperature and low-pressure gaseous refrigerant.

The refrigerant, which has undergone phase change into a low-temperature and low-pressure gaseous refrigerant, flows into the cooling unit 410, which is an evaporator, and cold air can be supplied into the cabin by the operation of the interior temperature control fan 420 of the control unit 900. By the operation of the interior temperature control fan 420, air can be cooled through the cooling unit 410 and then can be supplied into the cabin.

In this case, the control unit 900 determines whether it is required to cool the power unit 310 through state detection unit 920 of the power unit 310. When the control unit 900 determines that it is required to cool the power unit 310 on the basis of information detected by the state detection unit 920, it diverts some refrigerant before flowing into the cooling unit 410 of the interior temperature control device 400, thereby cooling the fluid flowing into the power unit 310. The control unit 900 has a preset reference temperature for cooling or heating the power unit 310.

Further, the heat management device 102 may further include a fluid tank 240 that stores fluid. The fluid stored in the fluid tank 240 can pass through the first flow path 230 or the second flow path 320.

Specifically, the heat management device 102 may further include a branching flow path 130, a second expansion valve 540, and a check valve 120. The branching flow path 130 can divert some refrigerant flowing into the cooling unit 410 and guide it to the second heat exchanger 640. The refrigerant that has passed through the branching flow path 130 can bypass the cooling unit 410 and move to the compressor 710 after passing through the second heat exchanger 640.

Further, the construction machine 101 may further include a fourth heat exchanger 630.

The fourth heat exchanger 630 may be disposed such that heat exchange occurs between the refrigerant flowing into the cooling unit 410 and the refrigerant moving to the compressor 710 after passing through the cooling unit 410. The fourth heat exchanger 630 may be an intermediate heat exchanger.

For example, as shown in FIG. 7, the second expansion valve 540 may be supported by the first heat exchanger 620.

The second expansion valve 540 can guide fluid such that the fluid can exchange heat with the second heat exchanger 640. Further, the second expansion valve 540 can be controlled by the control unit 900.

The check valve 120 is installed on the branching flow path 130 and can prevent the refrigerant that has passed through the second heat exchanger 640 from flowing back into the second heat exchanger 640 without passing through the compressor 710.

When determining that it is required to cool the power unit 310 on the basis of information detected by the state detection unit 920, as shown in FIG. 1, the control unit 900 controls the first valve 510 to separate the first flow path 230 and the second flow path 320.

Further, the control unit 900 opens both the first expansion valve 530 and the second expansion valve 540 and operates the second pump 730. The fluid moving along the second flow path 320 is partially diverted before flowing into the cooling unit 410, moves along the branching flow path 130, and is cooled by exchanging heat with the refrigerant flowing in the second heat exchanger 640. Therefore, the cooled fluid can perform cooling by cooling the power unit 310.

That is, the control unit 900 can use the fluid, which has exchanged heat with the refrigerant of the interior temperature control device 400, to cool the power unit 310.

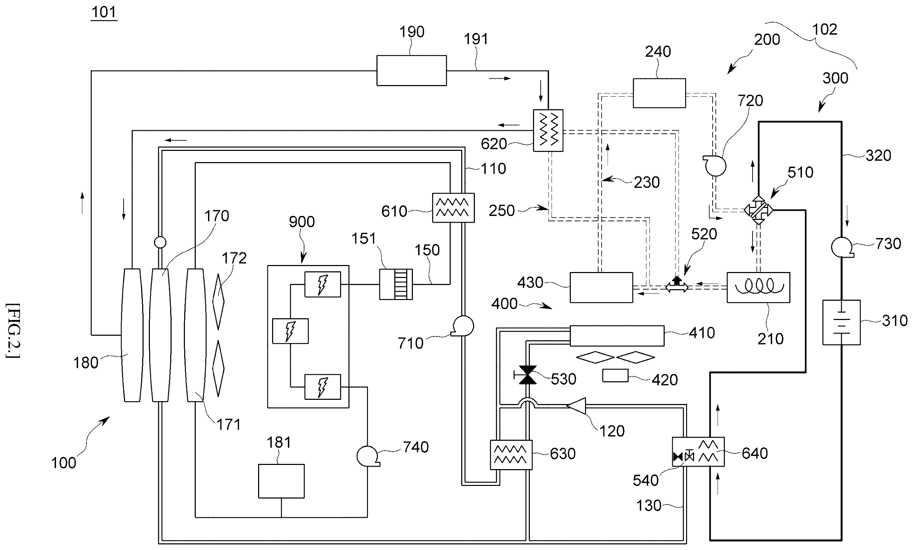

Further, as shown in FIG. 2, when a heating condition is input to the heating input unit 940 inside the cabin, the control unit 900 operates the heater 210 and the interior temperature control fan 420 to heat the inside of the cabin. Further, the control unit 900 stops the operation of the compressor 710 and closes the first expansion valve 530 and the second expansion valve 540.

The control unit 900 operates the heater 210 such that the heated fluid passes through the heater core 430. In this case, air is heated while passing through the heater core 430 by the interior temperature control fan 420 operated by the control unit 900. Therefore, the heated air can be supplied for heating through a duct (not shown) inside the cabin.

The control unit 900 determines whether it is required to heat the power unit 310 through the state detection unit 920 of the power unit 310.

The control unit 900, when determining that it is currently required to heat the power unit 310, controls the first valve 510 such that the fluid passing through the first flow path 230 and the fluid passing through the second flow path 320 are connected and allowed to flow. That is, the control unit 900 controls the first valve 510 such that the fluid that has passed through the first flow path 230 flows into the second flow path 320. In this case, the control unit 900 operates the first pump 720 and the second pump 730.

The fluid heated by the heater 210 flows into the heater core 430 through the first flow path 230, and the heated fluid flowing in the second flow path 320 heats the power unit 310.

Further, after heating the power unit 310, the fluid that has passed through the second flow path 320 flows back into the first flow path 230 and can be heated by the heater 210. In this case, the fluid can be moved by the first pump 720 and the second pump 730 while moving between the first flow path 230 and the second flow path 320.

As shown in FIG. 2, when the temperature of the hydraulic oil detected by the hydraulic oil detection unit 910 is equal to or below the preset reference temperature, the control unit 900 closes the second valve 520 such that the fluid heated by the heater 210 bypasses the first heat exchanger 620 and flows into the second flow path 320.

In this case, the heat management device 102 can heat the power unit 310 USING the thermal energy for heating the cabin.

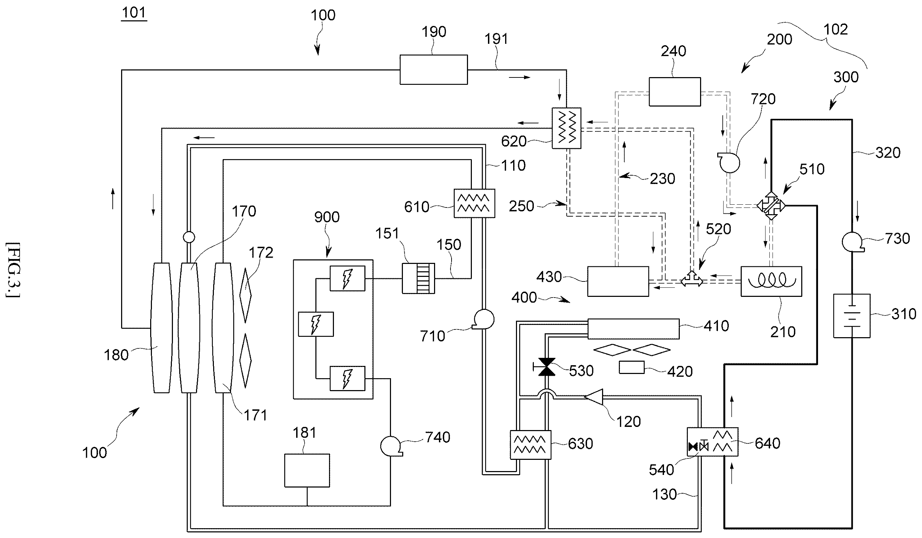

Alternatively, as shown in FIG. 3, when the temperature of the hydraulic oil detected by the hydraulic oil detection unit 910 exceeds the preset reference temperature, the control unit 900 opens the second valve 520.

As the control unit 900 opens the second valve 520, a portion of the fluid heated by the heater 210 can flow back into the first flow path 230 after being heated by exchanging heat with the high-temperature hydraulic oil in the first heat exchanger 620 through the third flow path 250. Then, the fluid flowing back into the first flow path 230 and the fluid heated by the heater 210 can flow into the second flow path 320 through the first flow path 230 by the first pump 720.

That is, when the hydraulic oil is at a high temperature, the heat management device 102 can effectively heat the power unit 310 by recovering not only the thermal energy for heating the interior temperature control device 400 but also the high-temperature waste heat of the hydraulic oil.

In this case, since the fluid can recover the high-temperature waste heat of the hydraulic oil, it is possible to reduce the energy for operating the heater 210 or increase the heating temperature of the fluid.

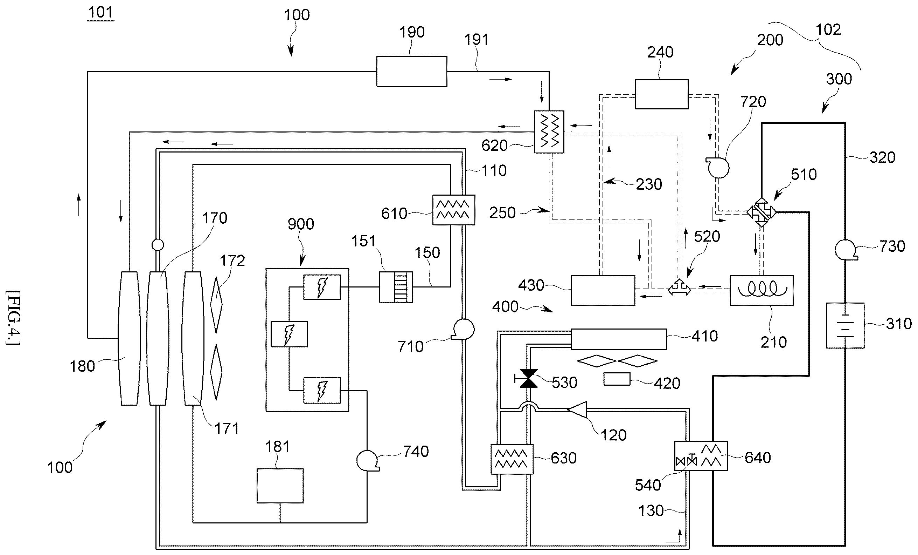

Further, as shown in FIG. 4, when a heating condition is input to the heating input unit 940 inside the cabin, the control unit 900 operates the heater 210 and the interior temperature control fan 420 to heat the inside of the cabin.

The control unit 900 operates the heater 210 such that the heated fluid passes through the heater core 430. In this case, air is heated while passing through the heater core 430 by the interior temperature control fan 420 operated by the control unit 900. Therefore, the heated air can be supplied for heating through a duct (not shown) inside the cabin.

That is, the control unit 900 can operate the first pump 720, the interior temperature control fan 420, and the heater 210.

Further, the control unit 900 can determine whether the power unit 310 is currently in a charging state through the state detection unit 920 of the power unit 310.

Further, as shown in FIG. 4, when the control unit 900 determines that the power unit 310 is currently in a charging state on the basis of information from the state detection unit 920, the power unit 310 can be cooled.

The control unit 900 can allow the first valve 510 to separate the first flow path 230 and the second flow path 320.

Further, the control unit 900 operates the compressor 710, closes the first expansion valve 530, and opens the second expansion valve 540. Further, the control unit 900 operates the second pump 730.

That is, the control unit 900 allows the refrigerant that has passed through the condenser 170 to move through a branching flow path 130 bypassing the cooling unit 410, flow into the second heat exchanger 640, and exchange heat with the fluid in the second flow path 320 at the second heat exchanger 640, whereby the fluid in the second flow path 320 can be cooled.

The refrigerant that has bypassed the cooling unit 410, after passing through the second heat exchanger 640, can flow back into the refrigerant flow path 110 and be compressed by the compressor 710.

The fluid in the second flow path 320 is cooled by exchanging heat with the refrigerant in the branching flow path 130 at the second heat exchanger 640, thereby being able to cool the power unit 310.

That is, even when heating of the cabin is performed, the heat management device 102 can effectively cool the power unit 310 through heat exchange with the refrigerant when the power unit 310 is charged.

In this case, the control unit 900 can open the second valve 520 on the basis of temperature information detected by the hydraulic oil detection unit 910. That is, when the hydraulic oil exceeds a preset reference temperature, the control unit 900 opens the second valve, whereby a portion of the fluid heated by the heater 210 can be mixed with the fluid heated by the heater 210 after passing through the first heat exchanger 620, and then can flow into the heater coil 430.

The heat management device 102 of the construction machine 101 can determine whether temperature control of the power unit 310 is required or whether the power unit 310 is in a charging state when the interior temperature control device 400 performs cooling or heating of the cabin, thereby being able to heat or cool the power unit 310. That is, the construction machine 101 can effectively manage the temperature of the power unit 310 when the inside of the cabin is heated, through heat exchange with waste heat of the hydraulic oil or with the refrigerant of the cooling unit 410.

Further, the construction machine 101 according to an embodiment of the present disclosure may further include a drive motor cooling device for cooling a drive motor 151. Specifically, the construction machine 101 may further include the drive motor 151, a radiator 171, a cooling fluid tank 181, a cooling flow path 150, a third heat exchanger 610, a third pump 740, and a cooling fan 172.

The drive motor 151 may be a motor required for traveling of the construction machine 101.

Fluid is stored in the cooling fluid tank 181 and can pass through cooling flow path 150. The radiator 171 can cool the fluid introduced through the cooling flow path 150. Specifically, the cooling fan 172, which guides external air into the radiator 171, operates, whereby it is possible to cool the fluid through heat exchange between the external air and the fluid passing through the radiator 171.

The cooled fluid cools the drive motor 151, so it is possible to reduce the temperature of the drive motor 151 depending on the operation of the drive motor 151.

Further, the third heat exchanger 610 can allow heat exchange between the fluid flowing through the cooling flow path 150 and the fluid flowing through the refrigerant flow path 110. That is, the third heat exchanger 610 can effectively reduce the temperature of the fluid using the refrigerant passing through the refrigerant flow path 110.

The third pump 740 can control the flow of the fluid passing through the cooling flow path 150.

The cooling fan 172 and the third pump 740 can be controlled by the control unit 900.

With this configuration, the construction machine 101 and the heat management device 102 installed therein according to an example of the present disclosure can heat or cool the power unit 310 by recovering and exchanging thermal energy during cooling or heating of the cabin.

That is, the heat management device 102 can prevent problems that may occur when the temperature of the power unit 310 increases or when the power unit 310 is exposed to low temperatures, by recovering and exchanging thermal energy during cooling or heating of the cabin.

Although exemplary embodiments of the present disclosure were described above with reference to the accompanying drawings, those skilled in the art would understand that the present disclosure may be implemented in various ways without changing the necessary features or the spirit of the prevent disclosure.

Therefore, it should be understood that the embodiments described above are not limitative, but only examples in all respects, the scope of the present disclosure is expressed by claims described below, not the detailed description, and it should be construed that all of changes and modifications achieved from the meanings and scope of claims and equivalent concept are included in the scope of the present disclosure.

### [INDUSTRIAL APPLICABILITY]

According to an embodiment of the present disclosure, the construction machine and the heat management device installed therein can recover or exchange thermal energy during cooling or heating and utilize the thermal energy to heat or cool the power unit.

### <DESCRIPTION OF REFERENCE NUMERALS >

| | | | |
|---|---|---|---|
| 100: | hydraulic oil cooling device | 101: | construction machine |
| 102: | heat management device | 200: | heating unit |
| 210: | heater | 230: | first flow path |
| 250: | third flow path | | |
| 300: | cooling unit | 310: | power unit |
| 320: | second flow path | | |
| 400: | interior temperature control device | 410: | cooling member |
| 430: | heater core | | |
| 510: | first valve | 520: | second valve |
| 620: | first heat exchanger | 640: | second heat exchanger |
| 720: | first pump | 730: | second pump |

## Claims

1. A construction machine comprising:
a power unit configured to provide power to the construction machine;
a hydraulic oil cooling device configured to cool hydraulic oil for operating the construction machine;
an interior temperature control device configured to supply cooled or heated air to an operator; and
a heat management device through which fluid passes and which controls temperature of the power unit through heat exchange with hydraulic fluid flowing into the hydraulic fluid cooling device or with the interior temperature control device.

2. The construction machine of claim 1, wherein the heat management device includes:
a first heat exchanger capable of exchanging heat with hydraulic oil flowing into the hydraulic oil cooling device;
a second heat exchanger capable of exchanging heat with a refrigerant of the interior temperature control device; and
a first valve disposed between the first heat exchanger and the second heat exchanger and selectively controlled depending on temperature control of the power unit.

3. The construction machine of claim 2, wherein the heat management device further includes a heater capable of heating fluid when heating the power unit.

4. The construction machine of claim 2, wherein the heat management device controls the first valve such that the fluid heats the power unit and then passes through the second heat exchanger when heating the power unit.

5. The construction machine of claim 4, wherein the heat management device further includes a second valve configured to selectively allow the fluid to bypass the second heat exchanger, depending on temperature of hydraulic oil.

6. The construction machine of claim 2, wherein the interior temperature control device further includes a heater core capable of supplying heated air to an interior.

7. The construction machine of claim 2, wherein heat management device controls the first valve such that fluid that has passed through the second heat exchanger cools the power unit when cooling the power unit.

8. A construction machine comprising:
a power unit configured to provide power to the construction machine;
an interior temperature control device including a heater core capable of supplying heated air into a cabin by operating during heating and a cooling member capable of supplying cooled air into the cabin by operating during cooling; and
a heat management device configured to control temperature of the power unit by exchanging heat with a refrigerant flowing into the cooling member during cooling and by supplying fluid, which has passed through the heater core, during heating.

9. The construction machine of claim 8, wherein the heat management device includes:
a first flow path configured to guide fluid, which has passed through the heater core, to the power unit;
a second flow path configured to guide fluid, which has exchanged heat with a refrigerant passing through the cooling member, to the power unit; and
a first valve disposed between the first flow path and the second flow path and capable of selectively supplying heated fluid or cooled fluid to the power unit.

10. The construction machine of claim 9, wherein the heat management device includes:
a first pump configured to control flow of fluid passing through the first flow path; and
a second pump configured to control flow of fluid passing through the second flow path.

11. The construction machine of claim 9, wherein the heat management device further includes:
a first heat exchanger capable of exchanging heat with hydraulic oil flowing into a hydraulic oil cooling device configured to cool hydraulic oil for operating the construction machine;
a heater capable of heating fluid passing through the first flow path; and
a third flow path configured to divert and guide a portion of fluid heated by the heater and passing through the first flow path such that the fluid can exchange heat with the first heat exchanger.

12. The construction machine of claim 11, wherein the heat management device further includes a second valve configured to selectively guide fluid to the third flow path, depending on temperature of hydraulic oil.

13. The construction machine of claim 8, wherein the heat management device guides fluid, which has exchanged heat with a refrigerant flowing into the cooling member, to the power unit when the power unit is charged.

14. A heat management device that is installed in a construction machine including a power unit configured to provide power to the construction machine, a hydraulic oil cooling device being operated by the power unit and configured to cool hydraulic oil for operating the construction machine, and an interior temperature control device capable of controlling temperature of the inside of a cabin, and that controls temperature of the power unit, the heat management device comprising:
a heating unit capable of increasing the temperature of the power unit by recovering thermal energy during heating by the interior temperature control device;
a cooling unit configured to reduce the temperature of the power unit by exchanging thermal energy with a refrigerant of the interior temperature control device; and
a first valve configured to control the temperature of the power unit by selectively controlling flow of fluid passing through the heating unit or the cooling unit.

15. The heat management device of claim 14, wherein the heating unit further includes:
a first heat exchanger capable of exchanging heat with the hydraulic oil;
a heater capable of heating fluid; and
a second valve configured to selectively guide fluid into the first heat exchanger, depending on temperature of the hydraulic oil.

16. The heat management device of claim 14, wherein the cooling unit further includes a second heat exchanger capable of exchanging heat with a refrigerant of the interior temperature control device.
